# EUROPÄISCHE PATENTSCHRIFT

(11) **EP 4 310 722 B1**
(45) Veröffentlichungstag und Bekanntmachung des Hinweises auf die Patenterteilung: **28.08.2024**
(21) Anmeldenummer: 22185480.5
(22) Anmeldetag: 18.07.2022
(51) Int. Cl.: G06K 7/10, H04N 23/56, H04N 23/67

(54) **CODELESEVORRICHTUNG UND ANZEIGEN EINER FOKUSEINSTELLUNG**
CODE READING APPARATUS AND FOCUS SETTING DISPLAY
DISPOSITIF LECTEUR DE CODE ET INDICATIONS D'UN RÉGLAGE DE MISE AU POINT

(43) Veröffentlichungstag der Anmeldung: 24.01.2024
(73) Patentinhaber: SICK AG, 79183 Waldkirch (DE)
(72) Erfinder: Weber, Christopher, 77960 Seelbach (DE); Schütz, Frank, 79365 Rheinhausen (DE)

(56) Entgegenhaltungen:
- EP-A1- 3 525 445
- US-A1- 2010 220 202

## Beschreibung

Die Erfindung betrifft eine Codelesevorrichtung zum Lesen von optischen Codes und ein Verfahren zum Anzeigen einer Fokuseinstellung nach dem Oberbegriff von Anspruch 1 beziehungsweise 11.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die codetragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Ein Codeleser ist üblicherweise mit einer fokusverstellbaren Optik ausgerüstet. Damit wird ein optimaler Arbeitspunkt eingestellt, in dem die Codes scharf aufgenommen und so mit hoher Leserate gelesen werden. Es ist lange bekannt, mit einer Autofokusfunktion situationsabhängig auf das jeweilige Objekt zu fokussieren. Es gibt daneben aber noch zahlreiche Anwendungen, in denen zur Kostenersparnis, wegen kleinerer Baugröße oder zur Vermeidung mechanischen Verschleißes für ständige Fokusanpassungen Geräte eingesetzt werden, die auf einen Autofokus verzichten. Eine manuelle Fokusverstellung etwa durch Drehen eines Fokussierrings am Objektiv ermöglicht dann das Scharfstellen auf eine typische Anwendungssituation, wobei der Tiefenschärfenbereich des Codelesers ausreicht, um Codes in davon abweichenden Abständen weiterhin lesen zu können. Zur Kontrolle, ob die Fokuslage für die typische Anwendungssituation beispielsweise bei Aufnahme eines Musterobjekts richtig eingestellt ist, dient eine grafische Benutzeroberfläche auf einem Installationsrechner. Der Fokussierring wird so lange hin und her gedreht, bis der Inbetriebnehmer den Punkt der maximalen Bildschärfe gefunden hat.

Im Feld werden jedoch Codeleser oft an für den Inbetriebnehmer ungünstigen Positionen beispielsweise eines Lesetunnels installiert. Um das Gerät zu erreichen und manuell auf dessen Fokuslage einzuwirken, muss der Inbetriebnehmer eine ungünstige Körperhaltung einnehmen und beispielsweise auf das Förderband oder eine Leiter steigen. Dabei verbleibt der Installationsrechner mit Anzeige eines Schärfestatus dann nur noch unter Schwierigkeiten oder gar nicht mehr im Sichtfeld. Die Folge ist ein ausgesprochen mühsamer Einrichtvorgang mit mehreren Ortswechseln zwischen Gerät und Installationsrechner oder gefährlichen Körperhaltungen, um den Installationsrechner in den Blick zu bekommen. Das verführt dazu, die Fokuslage nur halbherzig einzustellen, womit das Gerät nicht seine optimale Leistung zeigt und die Leserate sich verschlechtert.

Die EP 2 136 248 A1 offenbart eine Bildaufnahmevorrichtung mit anpassbarer Beleuchtung, nämlich einer Objektbeleuchtung und/oder einer Positionierbeleuchtung. Eine Verstellung der Fokussierung der Empfangsoptik bewirkt automatisch die Anpassung der Objekt- und/oder Positionierbeleuchtung an die verstellte Fokussierung. Die WO 2009/007772 A2 befasst sich mit einem Kamerasystem, das eine leuchtende Referenzfigur auf die Erfassungsebene projiziert, wobei die Fokussierung der Kamera und der Referenzfigur einander entsprechen. Dadurch ergibt sich zwar jeweils ein Hinweis auf die aktuelle Fokuseinstellung, dies ist jedoch aus einer Montageposition heraus schwer zu beurteilen, und es fehlt an gezielter Unterstützung zum Auffinden einer optimalen Fokuslage.

Aus der DE 20 2013 102 193 U1 ist ein Hilfssystem zum Scharfstellen einer Webkamera bekannt. Anhand einer Bilddatenstatistik wird ein Fokusalgorithmus durchgeführt und danach ein akustischer oder optischer Signalgeber gesteuert, damit ein Benutzer die Linse manuell einstellen kann. Dazu blinkt eine rote Anzeigelampe am Gerät fortlaufend und ein Summer piept andauernd, wenn sich das Aufnahmebild in einem unscharfen Zustand befindet. Bei Annäherung an einen scharfen Zustand erlischt die rote Anzeigelampe und eine grüne Anzeigelampe blinkt dauerhaft, während der Summer keinen Piepton ausgibt. In einem scharfen Zustand leuchtet die grüne Anzeigelampe dauerhaft. Eine Rückmeldung über Anzeigelampen am Gerät ist für eine Webkamera völlig angemessen, aber für einen Codeleser in der geschilderten Montagesituation an einem Lesetunnel sehr häufig nicht nützlich, weil die Anzeigelampen in der Montageposition nicht mehr sichtbar sind.

Die EP 3 525 445 A1 offenbart eine Kamera und ein Verfahren zur Fokusverstellung, bei dem eine Innenkontur von außen durch die Frontscheibe zugänglich ist, mit deren Hilfe ein Gewinde zum Verändern der Fokusposition gedreht werden kann. Ferner sind Anzeigeeinheiten zum Visualisieren eines Soll-Werts und eines Ist-Werts der Fokusposition in Form von Lichtleisten vorgesehen.

In der US 2010/0220202 A1 wird eine Webkamera vorgestellt, deren Installation durch eine schnelle Rückmeldung bei der Einstellung der Fokuslage erleichtert wird. Die Rückmeldung erfolgt über Töne oder LEDs.

Es ist daher Aufgabe der Erfindung, die Einrichtung einer Codelesevorrichtung zu vereinfachen und zu verbessern.

Diese Aufgabe wird durch eine Codelesevorrichtung zum Lesen von optischen Codes und ein Verfahren zum Anzeigen einer Fokuseinstellung nach Anspruch 1 beziehungsweise 11 gelöst. Die Codelesevorrichtung kann ein Barcodescanner sein, beispielsweise mit einer Photodiode als Lichtempfangselement. Ein während des Scannens aufgenommenes Helligkeitsprofil liefert dann Bilddaten entsprechend einer Bildzeile. Vorzugsweise handelt es sich um einen kamerabasierten Codeleser mit einem Bildsensor als Lichtempfangselement. Dieser Bildsensor wiederum kann als ein Zeilensensor zur Erfassung einer Codezeile beziehungsweise eines flächigen Codebildes durch Zusammensetzen von Bildzeilen im Laufe einer Relativbewegung zwischen Codelesevorrichtung und optischem Code sein. Alternativ handelt es sich um einen Matrixsensor, wobei auch Aufnahmen eines Matrixsensors zu einem größeren Ausgangsbild zusammengefügt sein können. Ein Verbund mehrerer Codeleser oder Kameraköpfe ist ebenfalls denkbar.

Die Codelesevorrichtung weist eine Optik auf. Damit ist vorzugsweise an eine Empfangsoptik beziehungsweise ein Empfangsobjektiv eines kamerabasierten Codelesers gedacht, das je nach Qualitätsanforderungen eine oder mehrere Linsen und sonstige optische Elemente aufweist und für die Aufnahme hochwertiger Bilddaten sorgt. In einem Barcodescanner kann die Optik sendeseitig den Scanstrahl und somit den abtastenden Lichtfleck scharfstellen. Für eine jeweilige Anpassung der Fokuslage ist eine Fokusverstellung der Optik vorgesehen. Die Fokusverstellung erfolgt vorzugsweise manuell und nicht per Autofokus. Neben einer bevorzugten rein mechanischen Fokusverstellung beispielsweise mittels Stellring ist eine motorische Fokusverstellung möglich, die manuell bedient wird.

Die Codelesevorrichtung verfügt weiterhin über Anzeigemittel für eine optische und/oder akustische Rückmeldung über die Fokuseinstellung. Eine Steuer- und Auswertungseinheit, die in die Codelesevorrichtung integriert oder als Steuerungsgerät daran angeschlossen sein kann, wertet die Bilddaten aus und liest den Code mit einem Decodierverfahren.

Die Erfindung geht von dem Grundgedanken aus, die aktuell eingestellte Fokuslage zu bewerten und dem Benutzer ein Ergebnis dieser Bewertung rückzumelden. Die Rückmeldung über die Anzeigeeinrichtung umfasst eine Information über eine der Schärfe entsprechende Güte.

Die Erfindung hat den Vorteil, dass dem Inbetriebnehmer in besonders einfacher und ergonomischer Form Rückmeldung über die aktuelle Fokuslage gegeben wird. Eine Visualisierung auf einem Installationsrechner ist nicht mehr notwendig. Damit entfällt die Schwierigkeit, den Installationsrechner in schwer zugänglichen Montagepositionen im Blick zu behalten. Die Inbetriebnahme wird einfacher, schneller und führt zu besseren Ergebnissen, wovon die spätere Leserate profitiert.

Die Steuer- und Auswertungseinheit ist bevorzugt dafür ausgebildet, die Güte der Fokuslage mittels Bildauswertung der Bilddaten zu bewerten. Die Steuer- und Auswertungseinheit unterzieht dabei automatisch die in der aktuellen Fokuslage aufgenommenen Bilddaten einer Bildverarbeitung, mit der die Schärfe bewertet werden kann, beispielsweise durch ein Kontrastmaß.

Die Codelesevorrichtung weist bevorzugt einen Abstandssensor auf, wobei die Steuer- und Auswertungseinheit dafür ausgebildet ist, die Güte der Fokuslage anhand eines Abstandswertes des Abstandssensors zu bewerten. Der Abstandssensor misst den Abstand zu dem aufgenommenen Objekt, und dieser Abstandswert gibt die optimale Fokuslage an. Im Gegensatz zu einem Autofokussystem wird aber kein automatischer Regelkreis aufgebaut, die Abstandsmessung wird vielmehr dazu verwendet, den Inbetriebnehmer zu unterstützen.

Die Steuer- und Auswertungseinheit ist bevorzugt dafür ausgebildet, die Güte der aktuell eingestellten Fokuslage mit einer früher eingestellten Fokuslage zu vergleichen. Dieser Vergleich kann auf Ebene der jeweiligen Güte, gemessener Abstände und/oder der Bilddaten selbst stattfinden. Der Vergleich gibt Aufschluss darüber, welchen Einfluss zuletzt vorgenommene Fokusverstellungen auf die Güte genommen haben. Dadurch sind gezieltere Rückmeldungen über die Richtung beziehungsweise das Ausmaß noch erforderlicher Fokusverstellungen möglich.

Die Steuer- und Auswertungseinheit ist bevorzugt dafür ausgebildet, mit der Rückmeldung eine quantitative Abweichung gegenüber einer optimalen Fokuslage anzuzeigen. Die Rückmeldung geht somit über eine qualitative Anzeige hinaus, dass die Fokuslage noch nicht optimal ist, sie gibt quantitativ Auskunft über eine noch bestehende Abweichung. Die Anzeige kann beispielsweise eine Prozentzahl sein, wobei dies nicht zwingend in Ziffern dargestellt wird, sondern in beliebiger geeigneter Repräsentation. Im Übrigen bedeutet anzeigen, dass die Fähigkeiten der Anzeigeeinrichtung genutzt werden, und schließt damit eine akustische Anzeige ein.

Die Steuer- und Auswertungseinheit ist bevorzugt dafür ausgebildet, mit der Rückmeldung eine Richtung für eine noch erforderliche Fokusverstellung anzuzeigen, um eine optimale Fokuslage zu erreichen. Die Rückmeldung enthält damit die Information, ob die momentan eingestellte Fokuslage gegenüber der optimalen Fokuslage zu kurz oder zu lang eingestellt ist. Interessant für den Benutzer ist die daraus abzuleitende, noch erforderliche weitere manuelle Fokusverstellung. Beispielsweise kann ein Pfeil ein Drehen eines Stellrings gegen den Uhrzeigersinn anfordern, womit die Richtung der optimalen Fokuslage mindestens implizit gezeigt ist. Erneut sind verschiedenste Repräsentationen dieser Information einschließlich einer akustischen Anzeige möglich.

Die Anzeigeeinrichtung ist dafür ausgebildet, ein Lichtsignal oder ein Lichtmuster auf den optischen Code oder auf ein Objekt mit dem Code zu projizieren. Die Projektion hat den Vorteil, dass die Rückmeldung leichter zugänglich wird. Die Codelesevorrichtung muss notwendig freie Sicht auf den Code haben, egal wie ungünstig die Montageposition ansonsten sein mag, so dass ein Inbetriebnehmer, der Einstellungen am Gerät vornimmt, den Code und ein darauf projiziertes Lichtsignal oder Lichtmuster in aller Regel ebenfalls gut sehen kann. Das ist bei einer Anzeige direkt am Gerät selbst keineswegs gegeben, die in der Montageposition häufig verdeckt würde.

Die Anzeigeeinrichtung ist bevorzugt als Zieleinrichtung zum Ausrichten der Codelesevorrichtung ausgebildet. Eine solche Zieleinrichtung ist in vielen Codelesevorrichtungen vorhanden, um eine Lese- oder Montageposition zu finden, in der ein Code gut aufgenommen werden kann. Durch visuelles Feedback, etwa ein Zielkreuz, wird erkennbar, wo die Codelesevorrichtung den zu lesenden Code erwartet. Beispielsweise wird ein in einem Lesetunnel montierter Codeleser auf ein Musterobjekt ausgerichtet oder in einer Präsentationsanwendung dafür gesorgt, dass sich der Code einigermaßen mittig im Lesefeld befindet. Eine solche Zieleinrichtung kann nun in Doppelfunktion zusätzlich als erfindungsgemäße Anzeigeeinrichtung genutzt werden.

Die Steuer- und Auswertungseinheit ist bevorzugt dafür ausgebildet, eine Rückmeldung über die Güte der aktuell eingestellten Fokuslage, eine Abweichung von einer optimalen Fokuslage, eine Richtung und/oder ein Ausmaß einer zum Erreichen einer optimalen Fokuslage erforderlichen Fokusverstellung über eine Blinksequenz, ein Lichtmuster, eine Farbe, eine Helligkeit, eine Tonhöhe, eine Tonsequenz und/oder eine Lautstärke anzuzeigen. Mit einer entsprechend ausgebildeten Anzeigeeinrichtung kann erfindungsgemäß eine differenzierte Rückmeldung über die Fokuslage und eine für optimale Bildaufnahme noch erforderliche Fokusverstellung gegeben werden. Besonders geeignet ist dafür eine Projektion auf den Code, wie in den beiden vorangegangenen Absätzen erläutert, da ein Lichtsignal oder Lichtmuster über die räumliche Anordnung, sein Zeitverhalten, seine Farbe und Helligkeit viele Parameter für intuitive Anzeigen aufweist. Beispielsweise können Blinksequenzen, Symbolbilder für verschiedene Fokusgüten, Richtungspfeile für noch erforderliche Fokusverstellungen und dergleichen verwendet werden. All das ist ebenso auf einer Anzeige am Gerät selbst denkbar, insbesondere ergänzend zu einer Projektion. Akustisch sind ähnliche Konzepte über Tonsequenzen, Melodien oder Jingles und die Lautstärke umsetzbar, insbesondere in Ergänzung einer optischen Anzeige

Die Steuer- und Auswertungseinheit ist bevorzugt dafür ausgebildet, je nach Ausmaß einer Abweichung von einer optimalen Fokuslage eine schnellere oder langsamere Blink- und/oder Tonsequenz anzuzeigen, bis hin zu einem Dauerlicht und/oder Dauerton bei Erreichen einer optimalen Fokuslage. Das ist ein besonders vorteilhaftes Beispiel aus der soeben dargestellten Vielfalt möglicher Anzeigen, um dem Inbetriebnehmer möglichst einfach erfassbar und intuitiv die noch erforderlichen Schritte zum Erreichen einer optimalen Fokuslage mitzuteilen.

Die Codelesevorrichtung ist bevorzugt stationär an einer Fördereinrichtung montiert, die zu erfassende Objekte mit Codes in einer Förderrichtung durch einen Erfassungsbereich der Codelesevorrichtung führt. Das ist eine besonders häufige Anwendungssituation, und gerade hier kommt es häufig zu für den Inbetriebnehmer ungünstigen Montagepositionen. Die erfindungsgemäße Rückmeldung über die Güte der aktuellen Fokuslage sowie Unterstützung beim Auffinden der noch erforderlichen Fokusverstellung ist hier besonders hilfreich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Codelesevorrichtung;
- Fig. 2: eine beispielhafte Montage einer Codelesevorrichtung an einer Fördereinrichtung; und
- Fig. 3: eine Skizze zum Veranschaulichen einer Rückmeldung über eine eingestellte beziehungsweise noch einzustellende Fokuslage einer Codelesevorrichtung an einen Inbetriebnehmer.

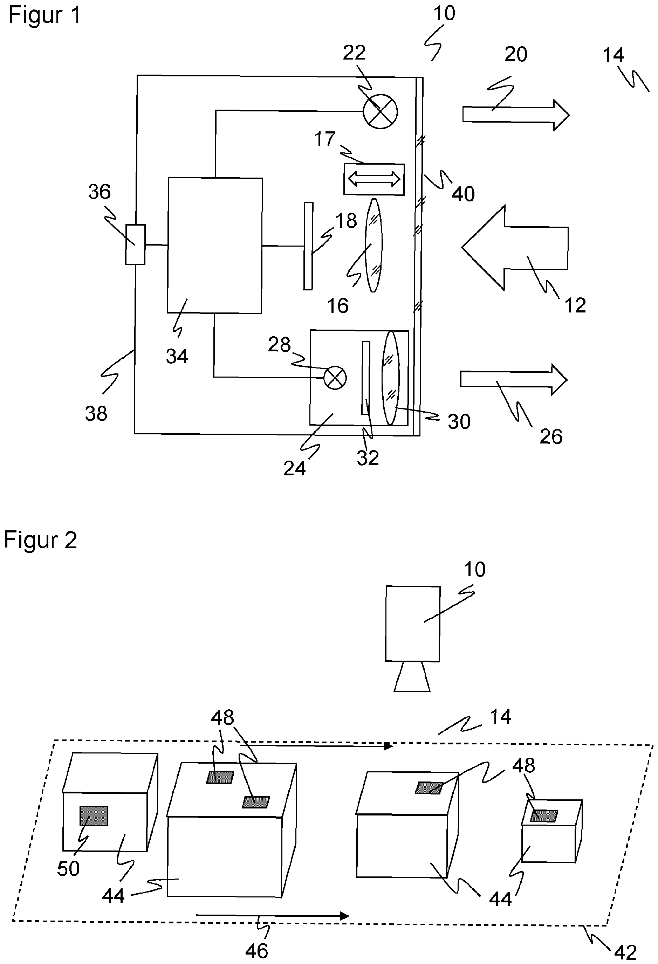

Figur 1 zeigt eine schematische Schnittdarstellung einer Codelesevorrichtung 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Die Empfangsoptik 16 kann mittels einer Fokusverstellung 17 auf verschiedene Fokuslagen eingestellt werden, um Objekte in unterschiedlichem Abstand scharf aufzunehmen. Dafür sind verschiedenste Funktionsprinzipien vorstellbar, beispielsweise ein Stellring an der Empfangsoptik 16 oder eine von außen für ein Werkzeug zugänglich gemachte Innenkontur zum Drehen eines Gewindes, wie in DE 10 2018 102 917 B3 beschrieben.

Um den Erfassungsbereich 14 während einer Aufnahme der Codelesevorrichtung 10 mit Sendelicht 20 auszuleuchten, umfasst die Codelesevorrichtung 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen.

Die Codelesevorrichtung 10 weist ferner eine Anzeigeeinrichtung 24 auf, mit der eine Rückmeldung über eine eingestellte Fokuslage ausgegeben werden kann. In der dargestellten Ausführungsform erfolgt die Anzeige durch Projektion 26 in den Erfassungsbereich 14. Für die Projektion 26 weist die Anzeigeeinrichtung 24 eine Lichtquelle 28 auf, beispielsweise mit einem oder mehreren Lasern oder LEDs, sowie eine Projektionsoptik 30. In einigen Ausführungsformen wird einfach die Lichtquelle selbst projiziert. Für komplexere Lichtmuster kann ein optionales Mustererzeugungselement 32 vorgesehen sein, das in besonders vorteilhafterweise schaltbar ausgestaltet sein kann, um verschiedene Lichtmuster zu erzeugen. So sind verschiedene Lichtsignale und Lichtmuster darstellbar, die je nach Ausführungsform in ihrer Form, zeitlichen Abfolge, Farbe und Helligkeit variierbar sind. In anderen Ausführungsformen ist eine Anzeige direkt am Gerät beziehungsweise eine akustische Anzeige möglich, wobei all dies auch miteinander kombiniert werden kann. Die akustische Anzeige kann die Ausgabe einfacher Töne, aber auch von Tonfolgen oder Melodien beziehungsweise Jingles in verschiedener Klangfarbe und Lautstärke ermöglichen.

Eine Steuer- und Auswertungseinheit 34 ist mit dem Bildsensor 18, der Beleuchtungseinheit 22 und der Anzeigeeinrichtung 24 verbunden und für die Steuerungs-, Auswertungs- und sonstigen Koordinierungsaufgaben in der Codelesevorrichtung 10 zuständig. Sie stellt eine passende Beleuchtung ein, nimmt Bilder auf, liest Bilddaten des Bildsensors 18 aus und decodiert Codes in den Bilddaten. Dafür erfolgt vorzugsweise in an sich bekannter Weise eine Segmentierung zum Auffinden von Codebereichen, und die Codebereiche werden mindestens einem Decoder zugeführt. Gelesene Codes, optional auch die Bilddaten selbst, können gespeichert beziehungsweise an einer Schnittstelle 36 ausgegeben werden. Für die verschiedenen Steuer- und Auswertungsaufgaben können mehrere Bausteine vorgesehen sein, beispielsweise um Vorverarbeitungen der Bilddaten auf einem separaten FPGA durchzuführen.

Während der Inbetriebnahme wird die Anzeigeeinrichtung 24 angesteuert, um eine Rückmeldung über die aktuelle Fokuslage zu geben. Dies kann mit einer Zielanzeige gekoppelt sein, mit der ein Inbetriebnehmer erkennt, wo sich der Erfassungsbereich 14 befindet. Die Steuer- und Auswertungseinheit 34 unterzieht die aktuell aufgenommenen Bilddaten einer Bildverarbeitung, um die Bildschärfe zu beurteilen und so die Güte der momentan eingestellten Fokuslage zu bewerten. Alternativ oder zusätzlich kann mit einem nicht dargestellten Abstandssensor der Abstand zu einem aufgenommenen Objekt und damit Code gemessen werden und die optimale Fokuslage aus dem Abstandswert bestimmt werden.

Die Codelesevorrichtung 10 wird durch ein Gehäuse 38 geschützt, das im vorderen Bereich, wo das Empfangslicht 12 einfällt, durch eine Frontscheibe 40 abgeschlossen ist. Der gezeigte Aufbau ist rein beispielhaft zu verstehen. Alternativ zu einer kamerabasierten Codelesevorrichtung 10 ist ein Barcodescanner vorstellbar, der eine fokusverstellbare Optik dafür nutzt, seinen Scanstrahl im Leseabstand zu bündeln.

Figur 2 zeigt eine mögliche Anwendung der Codelesevorrichtung 10 in Montage an einem Förderband 42. Die Codelesevorrichtung 10 ist hier nur noch als Symbol und nicht mehr mit ihrem bereits anhand der Figur 1 erläuterten Aufbau gezeigt. Das Förderband 42 fördert Objekte 44, wie durch den Pfeil 46 angedeutet, durch den Erfassungsbereich 14 der Codelesevorrichtung 10. Die Objekte 44 tragen an ihren Außenflächen Codebereiche 48. Aufgabe der Codelesevorrichtung 10 ist, die Codebereiche 48 zu erkennen, die dort angebrachten Codes auszulesen, zu dekodieren und dem jeweils zugehörigen Objekt 44 zuzuordnen. Um auch seitlich angebrachte Codebereiche 50 zu erfassen, werden vorzugsweise zusätzliche, nicht dargestellte Codelesevorrichtungen 10 aus unterschiedlicher Perspektive eingesetzt. Außerdem können mehrere Codelesevorrichtungen 10 nebeneinander angeordnet werden, um gemeinsam einen breiteren Erfassungsbereich 14 abzudecken.

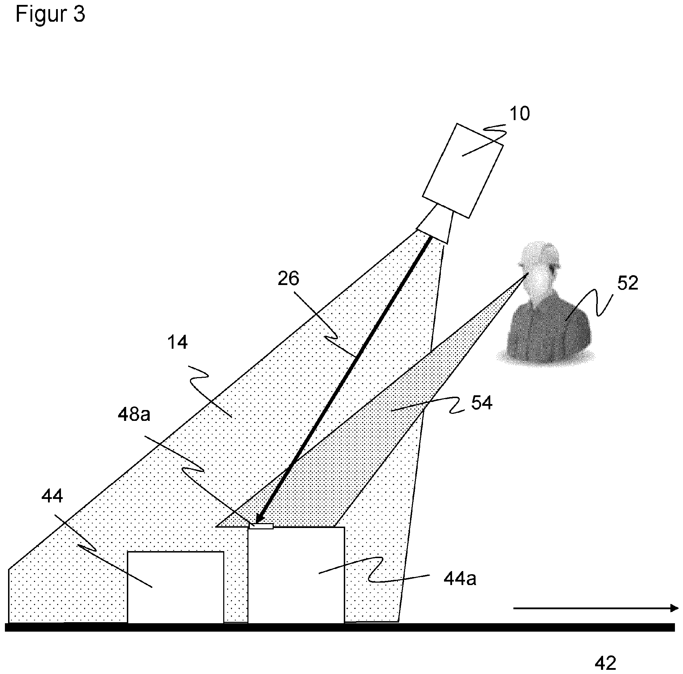

Figur 3 zeigt eine Skizze zum Veranschaulichen der Rückmeldung über eine eingestellte beziehungsweise noch einzustellende Fokuslage der Codelesevorrichtung 10 an einen Inbetriebnehmer mittels der Anzeigeeinrichtung 24. Während der Inbetriebnahme wird ein bestimmtes Objekt 44a vorzugsweise in der Bildmitte anvisiert, wobei es sich insbesondere um ein Referenzobjekt mit einem bekannten Code 48a handelt. Die Anzeigeeinrichtung 24 fungiert in dieser Ausführungsform beispielhaft zugleich als Zieleinrichtung, die über ihre Projektion 26 den Erfassungsbereich 14 insbesondere über dessen Zentrum markiert. Für die Inbetriebnahme muss die Projektion 26 ohnehin gut sichtbar sein, daher ist eine solche Doppelfunktion nicht nur apparativ, sondern auch funktionell von Vorteil.

Der Inbetriebnehmer 52 hat eine Perspektive 54, die derjenigen der Codelesevorrichtung 10 beziehungsweise dem Erfassungsbereich 14 ähnelt, da sich der Inbetriebnehmer 52 für die Montage und Einstellung der Codelesevorrichtung 10 in deren unmittelbarer Nähe befinden muss. Deshalb ist die Projektion 26 auf dem Code 48a gut erkennbar. Dadurch kann die Steuer- und Auswertungseinheit 34 dem Inbetriebnehmer 52 effektiv Auskunft über die momentane Fokuslage beziehungsweise noch notwendige Fokusverstellungen geben.

Als ein besonders vorteilhaftes Beispiel unter den zahlreichen möglichen Lichtmustern, zeitlichen Sequenzen, Farb- und Helligkeitseigenschaften der Projektion 26 für eine Rückmeldung sei ein definiertes Blinkmuster genannt, das einem einfachen Lichtspot oder einem komplexeren Lichtmuster aufgeprägt wird. Als Zeichen dafür, dass die optimale Fokuslage mit einem Arbeitspunkt maximaler Bildschärfe gefunden ist, kann eine Daueranzeige ohne Blinken dienen. In unschärferen Fokuslagen blinkt der Laser, wobei die Blinkfrequenz bei größerer Unschärfe gering ist und sich mit verbesserter Schärfe durch höhere Blinkfrequenz dem Dauerlicht annähert. Dadurch kennt der Inbetriebnehmer 52 intuitiv und sehr schnell erfassbar die korrekte Richtung für weitere Fokusverstellungen und weiß, wenn das Ziel einer optimalen Fokuslage erreicht ist. Parallel oder alternativ dazu kann die Anzeigeeinrichtung 24 mittels integrierter oder externer Lautsprecher oder Beeper einen Signalton mit der geschilderten Wiederholfrequenz ausgeben.

## Patentansprüche

1. Codelesevorrichtung (10) zum Lesen von optischen Codes (48), die ein Lichtempfangselement (18) zum Erfassen von Bilddaten mit einem optischen Code (48), eine Optik (16), eine Fokusverstelleinheit (17) zur Einstellung einer Fokuslage der Optik (16), eine Anzeigeeinrichtung (24) für eine optische Rückmeldung über die Fokuseinstellung und eine Steuer- und Auswertungseinheit (34) aufweist, die dafür ausgebildet ist, durch Auswerten der Bilddaten den Code (48) mit einem Decodierverfahren zu lesen,
**dadurch gekennzeichnet,**
**dass** die Steuer- und Auswertungseinheit (34) weiterhin dafür ausgebildet ist, eine Güte einer aktuell eingestellten Fokuslage zu bewerten und über die Anzeigeeinrichtung eine Rückmeldung über die Güte zu geben, und dass die Rückmeldung durch ein auf den optischen Code (48) oder auf ein Objekt (44) mit dem Code (48) projiziertes Lichtsignal oder Lichtmuster erfolgt.

2. Codelesevorrichtung (10) nach Anspruch 1,
wobei die Steuer- und Auswertungseinheit (34) dafür ausgebildet ist, die Güte der Fokuslage mittels Bildauswertung der Bilddaten zu bewerten.

3. Codelesevorrichtung (10) nach Anspruch 1 oder 2,
die einen Abstandssensor aufweist, wobei die Steuer- und Auswertungseinheit (34) dafür ausgebildet ist, die Güte der Fokuslage anhand eines Abstandswertes des Abstandssensors zu bewerten.

4. Codelesevorrichtung (10) nach einem der vorhergehenden Ansprüche,
wobei die Steuer- und Auswertungseinheit (34) dafür ausgebildet ist, die Güte der aktuell eingestellten Fokuslage mit einer früher eingestellten Fokuslage zu vergleichen.

5. Codelesevorrichtung (10) nach einem der vorhergehenden Ansprüche,
wobei die Steuer- und Auswertungseinheit (34) dafür ausgebildet ist, mit der Rückmeldung eine quantitative Abweichung gegenüber einer optimalen Fokuslage anzuzeigen.

6. Codelesevorrichtung (10) nach einem der vorhergehenden Ansprüche,
wobei die Steuer- und Auswertungseinheit (34) dafür ausgebildet ist, mit der Rückmeldung eine Richtung für eine noch erforderliche Fokusverstellung anzuzeigen, um eine optimale Fokuslage zu erreichen.

7. Codelesevorrichtung (10) nach einem der vorhergehenden Ansprüche,
wobei die Anzeigeeinrichtung (24) als Zieleinrichtung zum Ausrichten der Codelesevorrichtung (10) ausgebildet ist.

8. Codelesevorrichtung (10) nach einem der vorhergehenden Ansprüche,
wobei die Steuer- und Auswertungseinheit (34) dafür ausgebildet ist, eine Rückmeldung über die Güte der aktuell eingestellten Fokuslage, eine Abweichung von einer optimalen Fokuslage, eine Richtung und/oder ein Ausmaß einer zum Erreichen einer optimalen Fokuslage erforderlichen Fokusverstellung über eine Blinksequenz, ein Lichtmuster, eine Farbe, eine Helligkeit, eine Tonhöhe, eine Tonsequenz und/oder eine Lautstärke anzuzeigen.

9. Codelesevorrichtung (10) nach Anspruch 8,
wobei die Steuer- und Auswertungseinheit (34) dafür ausgebildet ist, je nach Ausmaß einer Abweichung von einer optimalen Fokuslage eine schnellere oder langsamere Blink- und/oder Tonsequenz anzuzeigen, bis hin zu einem Dauerlicht und/oder Dauerton bei Erreichen einer optimalen Fokuslage.

10. Codelesevorrichtung (10) nach einem der vorhergehenden Ansprüche,
die stationär an einer Fördereinrichtung (42) montiert ist, die zu erfassende Objekte (44) mit Codes (48) in einer Förderrichtung (46) durch einen Erfassungsbereich (14) der Codelesevorrichtung (10) führt.

11. Computerimplementiertes Verfahren zum Anzeigen einer Fokuseinstellung einer Codelesevorrichtung (10) zum Lesen von optischen Codes (48) nach einem der vorhergehenden Ansprüche, **dadurch gekennzeichnet,**
**dass** eine Güte einer aktuell eingestellten Fokuslage bewertet und über die Anzeigeeinrichtung (24) eine Rückmeldung über die Güte gegeben wird, und dass die Rückmeldung durch ein auf den optischen Code (48) oder auf ein Objekt (44) mit dem Code (48) projiziertes Lichtsignal oder Lichtmuster erfolgt.

## Claims

1. A code reading device (10) for reading optical codes (48) comprising a light-receiving element (18) for detecting image data including an optical code (48), optics (16), a focus adjustment unit (17) for adjusting a focus position of the optics (16), a display device (24) for optical feedback on the focus setting, and a control and evaluation unit (34) configured for reading the code (48) by evaluating the image data using a decoding method,
**characterized in that** the control and evaluation unit (34) is furthermore configured to evaluate a quality of a currently set focus position and to provide feedback about the quality via the display device, and **in that** the feedback is provided by a light signal or light pattern projected onto the optical code (48) or onto an object (44) with the code (48).

2. The code reading device (10) according to claim 1,
wherein the control and evaluation unit (34) is configured to evaluate the quality of the focus position by means of image evaluation of the image data.

3. The code reading device (10) according to claim 1 or 2,
comprising a distance sensor, wherein the control and evaluation unit (34) is configured to evaluate the quality of the focus position on the basis of a distance value of the distance sensor.

4. The code reading device (10) according to any of the preceding claims,
wherein the control and evaluation unit (34) is configured to compare the quality of the currently set focus position with a previously set focus position.

5. The code reading device (10) according to any of the preceding claims,
wherein the control and evaluation unit (34) is configured to use the feedback to indicate a quantitative deviation from an optimum focus position.

6. The code reading device (10) according to any of the preceding claims,
wherein the control and evaluation unit (34) is configured to use the feedback to indicate a direction for a focus adjustment still required in order to achieve an optimum focus position.

7. The code reading device (10) according to any of the preceding claims,
wherein the display device (24) is configured as a target device for aligning the code reading device (10).

8. The code reading device (10) according to any of the preceding claims,
wherein the control and evaluation unit (34) is configured to indicate feedback about the quality of the currently set focus position, a deviation from an optimum focus position, a direction and/or an extent of a focus adjustment required to achieve an optimum focus position via a flashing sequence, a light pattern, a color, a brightness, a pitch, a sound sequence and/or a sound volume.

9. The code reading device (10) according to claim 8,
wherein the control and evaluation unit (34) is configured to display a faster or slower flashing and/or sound sequence depending on the extent of a deviation from an optimum focus position, up to a continuous light and/or continuous sound when an optimum focus position is reached.

10. The code reading device (10) according to any of the preceding claims, that is stationarily mounted on a conveyor device (42) that guides objects (44) to be detected with codes (48) in a conveying direction (46) through a detection area (14) of the code reading device (10).

11. A computer-implemented method for displaying a focus setting of a code reading device (10) for reading optical codes (48),
**characterized in that** a quality of a currently set focus position is evaluated and feedback on the quality is given via the display device (24), and **in that** the feedback is provided by a light signal or light pattern projected onto the optical code (48) or onto an object (44) with the code (48).

## Revendications

1. Dispositif de lecture de code (10), destiné à lire des codes optiques (48), comprenant un élément de réception de lumière (18) destiné à acquérir des données d'image avec un code optique (48), une optique (16), une unité de réglage focal (17) destinée à régler une position focale de l'optique (16), un dispositif d'affichage (24) pour un retour d'information optique sur le réglage focal, et une unité de commande et d'évaluation (34) conçue pour lire le code (48) par évaluation des données d'image avec un procédé de décodage,
**caractérisé en ce que**
l'unité de commande et d'évaluation (34) est en outre conçue pour évaluer une qualité d'une position focale actuellement réglée et pour donner un retour d'information sur la qualité par l'intermédiaire du dispositif d'affichage, et **en ce que** le retour d'information s'effectue par un signal lumineux ou par un motif lumineux projeté sur le code optique (48) ou sur un objet (44) présentant le code (48).

2. Dispositif de lecture de code (10) selon la revendication 1,
dans lequel l'unité de commande et d'évaluation (34) est conçue pour évaluer la qualité de la position focale au moyen d'une évaluation d'image des données d'image.

3. Dispositif de lecture de code (10) selon la revendication 1 ou 2, comprenant un capteur de distance, l'unité de commande et d'évaluation (34) étant conçue pour évaluer la qualité de la position focale à l'aide d'une valeur de distance du capteur de distance.

4. Dispositif de lecture de code (10) selon l'une des revendications précédentes,
dans lequel l'unité de commande et d'évaluation (34) est conçue pour comparer la qualité de la position focale actuellement réglée avec une position focale réglée précédemment.

5. Dispositif de lecture de code (10) selon l'une des revendications précédentes,
dans lequel l'unité de commande et d'évaluation (34) est conçue pour indiquer par le retour d'information un écart quantitatif par rapport à une position focale optimale.

6. Dispositif de lecture de code (10) selon l'une des revendications précédentes,
dans lequel l'unité de commande et d'évaluation (34) est conçue pour indiquer par le retour d'information une direction pour un réglage focal encore nécessaire afin d'atteindre une position focale optimale.

7. Dispositif de lecture de code (10) selon l'une des revendications précédentes,
dans lequel le dispositif d'affichage (24) est conçu comme un dispositif de visée pour orienter le dispositif de lecture de code (10).

8. Dispositif de lecture de code (10) selon l'une des revendications précédentes,
dans lequel l'unité de commande et d'évaluation (34) est conçue pour afficher un retour d'information sur la qualité de la position focale actuellement réglée, un écart par rapport à une position focale optimale, une direction et/ou une ampleur d'un réglage focal nécessaire pour atteindre une position focale optimale, par l'intermédiaire d'une séquence de clignotements, d'un motif lumineux, d'une couleur, d'une luminosité, d'une hauteur du son, d'une séquence de sons et/ou d'un volume.

9. Dispositif de lecture de code (10) selon la revendication 8,
dans lequel l'unité de commande et d'évaluation (34) est conçue pour afficher une séquence de clignotements et/ou de sons plus rapide ou plus lente selon l'ampleur d'un écart par rapport à une position focale optimale, allant jusqu'à une lumière continue et/ou un son continu lorsqu'une position focale optimale est atteinte.

10. Dispositif de lecture de code (10) selon l'une des revendications précédentes,
qui est monté de manière stationnaire sur un dispositif de transport (42) qui achemine des objets (44) à détecter, présentant des codes (48), dans une direction de transport (46) à travers une zone de détection (14) du dispositif de lecture de code (10).

11. Procédé mis en oeuvre par ordinateur pour afficher un réglage focal d'un dispositif de lecture de code (10) destiné à lire des codes optiques (48) selon l'une des revendications précédentes,
**caractérisé en ce que**
une qualité d'une position focale actuellement réglée est évaluée, et un retour d'information sur la qualité est donné par l'intermédiaire du dispositif d'affichage (24), et **en ce que** le retour d'information s'effectue par un signal lumineux ou par un motif lumineux projeté sur le code optique (48) ou sur un objet (44) présentant le code (48).
